# EUROPEAN PATENT SPECIFICATION

(11) **EP 1 419 686 B1**
(45) Date of publication and mention of the grant of the patent: **31.10.2007**
(21) Application number: 03256528.5
(22) Date of filing: 16.10.2003
(51) Int. Cl.: A01D 34/71, A01D 43/063, A01D 43/077

(54) **Lawnmower**
Rasenmäher
Tondeuse à gazon

(30) Priority: 17.10.2002 GB 0224208
(43) Date of publication of application: 19.05.2004
(73) Proprietor: Husqvarna UK Limited, County Durham, DL5 6UP (GB)
(72) Inventor: Trevor, Michael Darmon, Darlington Co Durham, DL3 8UF (GB); Whittaker, Colin, Bishop Auckland County Durham, DL14 0SU (GB); Lawson, Ian, Newton Aycliffe County Durham, DL5 4RX (GB)
(74) Representative: Pratt, David Martin

(56) References cited:
- EP-A- 0 614 603
- EP-A- 0 821 869
- EP-A- 1 304 027
- BE-A- 1 005 783
- GB-A- 2 356 121
- US-A- 3 199 277
- US-A- 4 087 955
- US-A- 4 156 339
- US-A- 4 932 194

## Description

This invention relates to a lawnmower, and in particular to a so-called "wheeled rotary lawnmower" which includes a deck mounted on wheels, a cutting chamber defined within the deck, a cutter blade or blades rotatably mounted within the cutting chamber about a substantially vertical axis, and a grass collection receptacle for collecting cut grass.

EP-579386A discloses a wheeled rotary lawnmower whose deck includes access means in the form of an aperture or duct which leads cut grass to the grass collection receptacle. A fan blows air through the cutting chamber and the access means into the grass collection receptacle, sucks air from the receptacle for re-circulation. While this type of lawnmower is effective, it is often necessary to direct the air and cut grass around a curve or bend in order to take it from the cutting chamber to the grass collection receptacle. This is of particular concern where the grass collection receptacle is located above the deck, since the air and cut grass must pass through a longer and tighter curve than if the receptacle is located outwardly of (for example, behind) the deck. Where the grass collection receptacle is above the deck, the cut grass is very difficult to re-direct, since it tends to drop out of a curved stream of air and clog the lawnmower.

EP-821869A discloses a wheeled rotary lawnmower which attempts to overcome this problem by positioning the grass collection receptacle substantially centrally within the wheel base of the lawnmower, and by providing a secondary air stream which is directed into the grass collection receptacle to complement the main air flow through the receptacle, and to assist in deflecting the cut grass entrained in the main air stream into the interior of the receptacle.

Although this lawnmower is an improvement on earlier wheeled rotary lawnmowers, it does still suffer from problems in turning the grass and air around the relatively long and tight curve between the cutting chamber and the interior of the grass collection receptacle, particularly in wet conditions, when the cut grass tends to stick to the wall of the curve, eventually causing a blockage, and thereby preventing any further filling of the grass collection receptacle.

A mower according to the preamble of claim 1 is known from US-A-4 932 194,

The aim of the invention is to provide a wheeled rotary lawnmower which has a reduced or eliminated clogging problem.

The present invention provides a lawnmower comprising a deck defining a cutting chamber, the deck including an outlet for passage of cut grass from the cutting chamber, a cutter blade rotatable within the cutting chamber about a substantially vertical axis, and a grass collection receptacle including an air-permeable region and an inlet for entry of the cut grass from the cutting chamber, the deck being mounted on rotary members at forward and rearward positions, wherein the inlet of the grass collection receptacle is provided in a front wall of the receptacle, the outlet of the cutting chamber is aligned, in use, with the inlet of the grass collection receptacle, and the grass collection receptacle is positioned above the deck with the major part thereof within the wheelbase of the lawnmower, and with its front wall above the cutting chamber characterised in that the outlet of the cutting chamber is positioned substantially at a central, transverse outer edge portion of the cutting chamber, and a substantially straight volute disposed between the outlet of the cutting chamber and the inlet of the grass collection receptacle.

Throughout this specification, the terms "forward" and "rearward" should be taken to mean those positions remote from and adjacent to respectively the user of the lawnmower when the lawnmower is being operated in the usual manner, that is to say with the user pushing the lawnmower from "behind". Similarly, the "front wall" of the grass collection receptacle is that wall remote from the user when the lawnmower is being operated in the usual manner.

In a preferred embodiment, the volute rises from the outlet of the cutting chamber to define a volute exit that extends over a substantial portion of the height of the front wall of the receptacle. Advantageously, the volute exit extends over substantially the entire height of the front wall of the receptacle. Preferably, the inlet of the receptacle surrounds, in use, the volute exit.

The deck may support a housing, the housing enclosing the grass collection receptacle, and the lawnmower may further comprise a motor positioned within the housing, the motor being in drivable engagement with the cutter blade.

In a preferred embodiment, the grass collection receptacle is an open-topped receptacle having at least one of its walls formed with air-permeable portions.

Advantageously, the grass collection receptacle is provided with a pair of handles positioned at the top of a pair of opposed wall portions.

Preferably, the housing is provided with an upwardly-open aperture through which the grass collection receptacle can be inserted into, and removed from, the housing, and wherein a cover is provided for closing said aperture when the lawnmower is in use. Conveniently, the cover is pivotally mounted to the housing for movement between a first position, in which the grass collection receptacle can enter or leave the housing, and a second position in which the aperture is closed.

Preferably, when the cover is in the closed position, it provides a substantially airtight seal against those portions of the housing defining the upwardly-open aperture.

In a preferred embodiment, the rotary members are wheels. Preferably, there are two wheels at the front of the deck and two wheels at the rear of the deck. The lawnmower may further comprise a roller positioned between the two rear wheels.

It will be appreciated that, where the rotary members are not wheels, the term "wheelbase" should be taken to mean the distance between the axis of rotation of the forward and rearward rotary members.

A wheeled rotary lawnmower constructed in accordance with the invention will now be described in greater detail, by way of example, with reference to the drawings, in which:-
Figure 1 is a schematic, sectional side elevation of the lawnmower;
Figure 2 is a perspective view of the lawnmower with its deck and upper portion removed; and
Figure 3 is a plan view of the lawnmower with its upper portion removed.

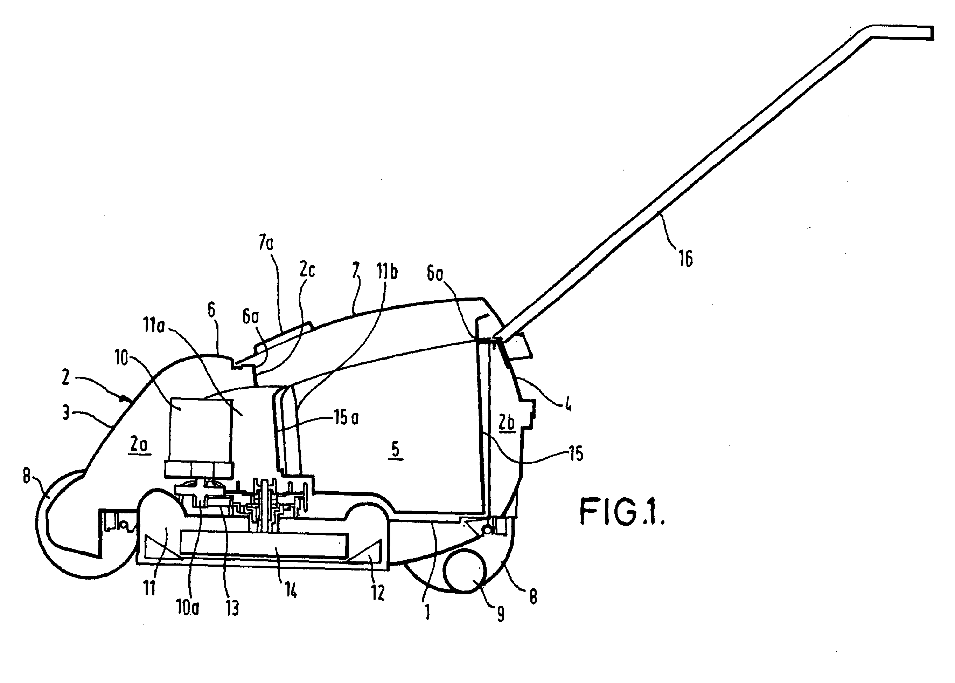

Referring to the drawings, Figure 1 shows a lawnmower having a base or deck 1, and a housing 2 mounted above the deck. The housing 2 defines a large internal cavity bounded by a sloping front wall 3, a rear wall 4, side walls 5 and a top wall 6. The top wall 6 is apertured (as indicated by the edges 6a), a cover 7 being pivotally attached to the top of the rear wall 4, so as to be movable between a closed position (as seen in the drawings), in which it overlies the aperture, and an open position which exposes the aperture. The deck 1 is supported by wheels 8 at the front and rear thereof, and a rear roller 9 is provided for generating a "stripe" appearance on a cut lawn.

The housing 2 is constituted by two moulded parts 2a and 2b, the forward housing part 2a being formed with a rear wall 2c that separates the two housing parts. The forward housing part 2a encloses a motor 10, which is mounted above a cutting chamber 11 formed beneath the deck 1, and the rearward part 2b is open towards ground datum. A cutter blade 12 is rotatably mounted within the cutting chamber 11 for rotation about a substantially vertical axis. The motor 10 has an output shaft 10a which is off-set from a shaft 12a of the cutter blade 12, drive being transferred from the motor output shaft to the cutter blade shaft by means of a drive belt 13. An impeller 14 is positioned above the cutter blade 12 on the shaft 12a for rotation therewith. The motor 10 is a self-cooled motor having an internal fan (not shown) which results in improved motor durability, as cooling is maintained when the motor is operating under load because the internal fan is still moving large volumes of air. Thus, the motor 10 is protected from overheating, even if the drive belt 13 fails, and cooling from the impeller 14 is lost. The belt 13 is of the V-belt type and co-operates with a matching pulley (not shown) on the motor shaft 10a and with a plain/smooth pulley (not shown) which operates a braking device (not shown) on the shaft 12a. Alternatively, the belt 13 is a toothed drive belt which co-operates with toothed pulleys on the motor drive shaft 10a and the shaft 12a. This type of drive belt is manufactured to tighter length tolerances than "smooth" drive belts normally used in lawnmowers, so that the pulleys can be mounted on fixed centres, resulting in improved reliability (there being substantially no loss of belt tension during product life), and lower assembly costs. Moreover, because of the toothed engagement of the belt 13 with the pulleys, there is reduced noise at start-up, as there is no danger of the belt slipping.

A removable grass collection receptacle 15 is mounted within the rearward part 2b of the housing 2, the receptacle being provided with a pair of handles (not shown) for facilitating removal of the receptacle from the lawnmower when the receptacle is to be emptied, and for returning the receptacle after emptying. The handles are positioned at opposite sides of the receptacle 15 across the width of the lawnmower. Alternatively, the handles could be positioned at the front and back of the receptacle. In either case, the provision of the handles allows easy removal of the receptacle 15 from the lawnmower, via the aperture 6a, by the operator using both hands. The cover 7 is provided with a transparent panel 7a so that the operator can see into the receptacle 15 to ascertain when it needs emptying. The receptacle 15 is of the basket type with an open top, and has perforations (not shown) in each of its side walls. Perforations may also be provided in the front and rear walls and/or in the floor of the receptacle 15. Where the receptacle 15 has perforations in all sides and the base, improved grass compaction results. Thus, air blown into the receptacle 15 by the cutter blade 12 and the impeller 14 can easily vent through the perforations in the receptacle sides and base, that is to say the flow of air is not obstructed as the receptacle fills. In addition, air is continuously drawn by the impeller 14 through the perforations at the front side of the receptacle 15 to aid compaction at the front, and then exhausts back into the cutting chamber 11. In the closed position, the cover 7 rests against the portions 6a of the top wall 6 defining the aperture so that the housing 2 defines a substantially airtight enclosure around the grass collection receptacle 15. The lawnmower incorporates a safety switch (not shown) which operates automatically when the cover 7 is open, thereby immobilising the motor and cutting off drive to the cutter blade 12.

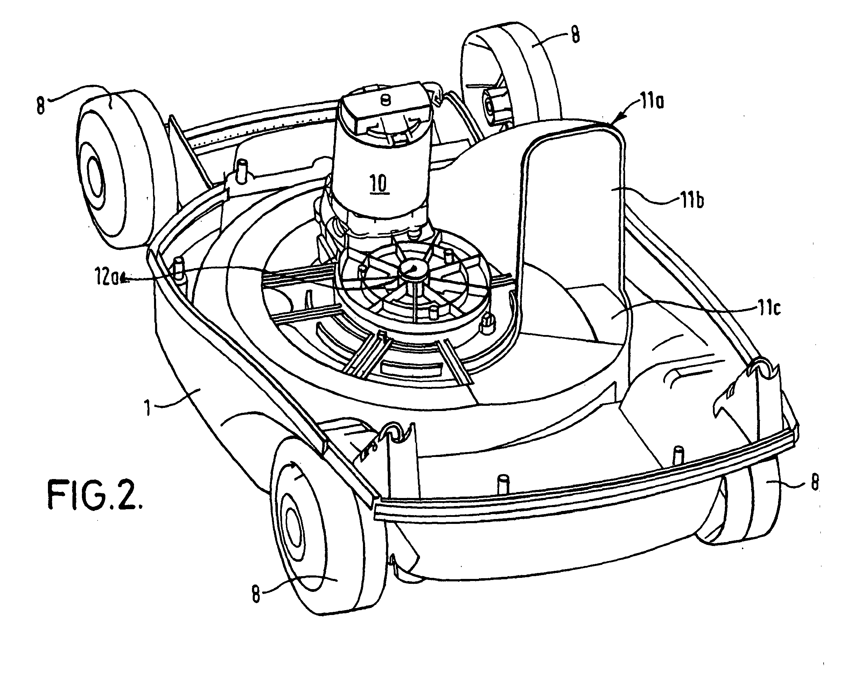

The receptacle 15 is formed with an inlet aperture (not shown) in its front wall 15a, the aperture surrounding an upwardly-inclined, short and straight volute 11a leading from the cutting chamber 11, the volute having an exit 11b which, in use, is positioned within the receptacle 15 adjacent to its front wall 15a, the volute exit extending over substantially the entire height by the receptacle front wall (see Figure 2). A handle 16 is provided for an operator to control the lawnmower.

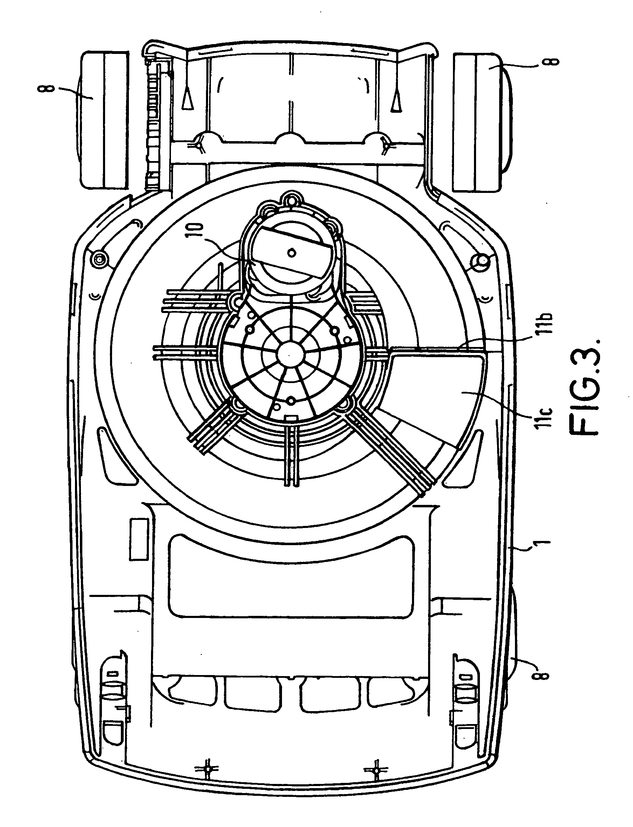

As will be apparent from Figure 1, the receptacle 15 is positioned within the wheel base of the lawnmower, with its forward portion extending partially over the cutting chamber 11. Moreover, as shown in Figure 2, the volute 11a leading from the cutting chamber 11 to the inlet to the receptacle 15 rises sharply to lift cut grass into the receptacle, and to prevent it falling back within the cutting chamber for re-circulation therein or dropping onto the lawn. The height of the volute exit 11b reinforces the lifting of cut grass and the preventing of it falling back into the cutting chamber 11. The position of the volute exit 11b (see Figure 3) at a substantially central, transverse outer edge portion of the cutting chamber 11 (the three o'clock position) permits the use of a receptacle 15 which extends partially over the cutting chamber 11, and so has potentially a larger volume than receptacles of known lawnmowers of this type in which the receptacle is positioned entirely behind the cutting chamber. This is a very important feature of the lawnmower described above, as the receptacle 15 can hold substantially more cut grass than known lawnmowers having the same overall configuration. Thus, the user of this lawnmower needs to make fewer stops during mowing to empty the receptacle 15 than would be necessary with known lawnmowers of this type.

The volute exit 11b is a non-vertical plane surface, this plane being radial from the centre of the volute 11a and being approximately normal to the side wall of the mower.

The plane is inclined at an angle, with the top of the exit 1 1b leaning towards the front of the mower. This helps with the removal and fitting of the receptacle 15 when emptying it of cut grass.

To aid the passage of cut grass from the volute 11a into the receptacle 15 through the volute exit 11b without the grass escaping into the body of the mower, the receptacle entrance has a lip (not shown) on its outside surface that overlaps the volute exit. This feature is on both the top and inner vertical surfaces (closest to the motor baseplate). There is not room for such a lip on the outer surface towards the outer wall of the mower body, as the two parts butt together in this region to form a simpler seal.

In operation, the motor drives the cutter blade 12 and the impeller which generate a low pressure within the cutting chamber 11, causing air to be drawn in under the perimeter of the deck 1 from the high-pressure area outside the deck. The air and entrained cut grass then pass from the cutting chamber 11 through the volute 11 a and into the receptacle 15. Because of its perforated nature, air (but not grass) can pass from within the receptacle 15 outwardly and then downwardly within the lawnmower body, finally exhausting through an opening (not shown) in the base of the deck 1, and out to the atmosphere. This downward exhaustion of air is assisted by the airtight fit between the cover 7 and the top wall 6 of the housing 2.

Because the volute 11a is short and straight, there is a substantially reduced chance that the passageway between the cutting chamber 11 and the receptacle 15 will clog, even with wet grass, in use. This lawnmower has the advantage of having the grass collection receptacle 15 mounted within the wheelbase of the mower, thereby ensuring that the weight of cut grass within the receptacle is positioned generally over the centre of gravity of the machine. This facilitates manoeuvrability of the lawnmower, even as the receptacle 15 fills with grass.

As the rearward part 2b of the lawnmower housing is open to ground datum beneath the receptacle 15, air can readily escape from the receptacle (via the perforations in its base and sides), resulting in a noise reduction from the lawnmower. The easier escape of air also improves grass compaction. Moreover, any grass entrained in the escaping air is deposited on the lawn, out of sight of the user. Consequently, a reduction in the amount of grass "sprayed" out by the lawnmower results. This also has the effect of keeping the lawnmower cleaner - in a conventional lawnmower grass "sprays" out of perforations in the sides and rear of the grass box, some of which will stick to the lawnmower and to the user's clothing.

As previously stated, cut grass travels from the cutting chamber 11 into the receptacle 15 by the movement of air created by the blade 12 and the impeller 14. To improve the efficiency of the passage of grass, the lower surface of the receptacle 15 at the interface of the volute exit 11b, and the receptacle entrance are angled downwards towards the ground, but above the plane scribed by the tip of the blade 12 to avoid damage by the blade. This makes it easier for the grass to be collected off the blade 12, and more grass can be collected with less grass being dropped by the mower. This lower surface of the receptacle 15 protrudes through a "cheese/wedge" shaped hole 11c seen behind the volute exit 11b and in the top surface of the main volute body 11a. Without the receptacle 15 in position, the ground can be seen.

A major user benefit of the lawnmower described above is the ease with which the grass collection receptacle 15 can be removed using both hands. Thus, whilst on other types of lawnmower, the grass box has to be removed for emptying using one hand to hold open a safety flap provided to close off access to the cutting chamber, and the other to lift the grass box away from the lawnmower, with the lawnmower described above, the cover 7 can first be raised and left in an open position (for example resting against the handle 16), after which the receptacle 15 can be removed using both hands. In this connection, it should be noted that this lawnmower does not need a safety flap to close off access to the cutting chamber 11, as the safety switch associated with the cover 7 is effective, together with a braking arrangement (not shown) associated with the motor 10, to ensure that the cutter blade 12 is stationary by the time that a user has removed the receptacle 15 for emptying. The receptacle 15 can then be inverted to empty out the cut grass. The large, open area at the top of the receptacle 14 allows the grass to fall out easily. This is to be contrasted with many traditional rear-mounted receptacles which have a small opening for entry of cut grass from the mower, the small opening acting also as an exit aperture through which the cut grass must be shaken or pulled out.

Another advantage of positioning the receptacle 15 within the wheelbase of the lawnmower is improved safety. Thus, if a stone or other hard object is thrown back by the cutter blade 12, the operator positioned behind the receptacle 15 is protected by the two-walled construction (that is to say the rear wall of the receptacle and the rear wall 4 of the housing 2) of the mower. Another advantage is that the housing 2 constitutes a strong, rigid structure that is both cost effective to manufacture and assemble. This structure may also contribute to lower noise levels than with traditional lawnmowers where the grass bag or box is mounted externally on the rear of the product.

A further advantage is that the handle 16 can be attached to the housing 2 in a simple manner, leading both to lower manufacturing costs and improved operating features.

The construction of the lawnmower having a smooth enclosed shape defined by the housing 2 is less likely to become entangled in, or damage, flowers, shrubs etc in flower beds adjacent to a lawn being cut. On a conventional lawnmower, the grassbox is held on location features, typically provided at the rear of the machine. In such a case, it is sometimes difficult for the user to locate the grassbox properly, as the spring safety flap has to be held open by one hand, whilst an attempt to locate the grassbox is made using the other hand. With the lawnmower described above, however, as the receptacle 15 is located, in use, entirely within the housing of the lawnmower, it is easily located in alignment with the volute 11a by being dropped in.

Moreover, the rear of the grassbox of a conventional lawnmower can be positioned so close to where the user grips the lawnmower's handle that, in some instances, the user can inadvertently kick the grassbox and remove it from engagement with the lawnmower. With the lawnmower described above, however, this cannot happen, as the receptacle 15 is located within the housing of the lawnmower.

Yet another advantage is that the roller 9 is mounted at the very rear of the lawnmower, thereby facilitating the provision of a superior "striped" finish to a cut lawn. This is to be contrasted with many known types of lawnmower, in which the roller is positioned between the cutting chamber and the grass collection receptacle, thereby complicating the passage of air with entrained grass into the receptacle. As the roller 9 is positioned behind the receptacle 15, the path for passage of air and grass cuttings into the receptacle is simplified, and, the action of the roller on a lawn is not affected by blown air and entrained grass cuttings, thereby resulting in the improved "striped" effect referred to above. The rear roller 9, which is used for producing a striped finish to a cut lawn, can be positioned between the rear wheels 9. This allows the volute 11 a between the cutting chamber 11 and the receptacle 15 to be reduced in length. This, in turn, reduces the length of the lawnmower, and reduces the length of grass that can plug the volute 11a. Moreover, if the volute 11a is so plugged, it is easier to clear, as the plug will be smaller than with a conventional lawnmower.

It will be apparent that the lawnmower described above could be modified in a number of ways. For example, air exiting the receptacle 15 could be drawn into the cutting chamber 11, thereby assisting with the compacting of cut grass within the receptacle.

It would also be possible to replace the wheels 8 by other forms of rotary member such as balls or rollers. The front wheels (or other forms of rotary member) could be positioned some way from the front of the deck 1, provided that the grass collection receptacle 15 remained within the wheelbase of the lawnmower. Thus, the front wheels (rotary members) could be positioned at, or towards, the rear of the cutting chamber 11, thereby enabling the mower to cut to the edge of a lawn without the front wheels (rotary members) going over the edge of the lawn which could cause the front of the mower to dip, leading to scuffing of the lawn edge by the cutter blade 12. A recess could also be included in the base of the receptacle 15 to act as an additional hand grip to assist in emptying the receptacle. It would also be possible to mount the roller 9 at the very rear of the machine, rather than between the rear wheels 8.

In another modified arrangement, a petrol engine could be used instead of the electric motor 10.

## Claims

1. A lawnmower comprising a deck (1) defining a cutting chamber (11), the deck including an outlet for passage of cut grass from the cutting chamber, a cutter blade (12) rotatable within the cutting chamber about a substantially vertical axis, and a grass collection receptacle (15) including an air-permeable region and an inlet for entry of the cut grass from the cutting chamber, the deck being mounted on rotary members (8) at forward and rearward positions, wherein the inlet of the grass collection receptacle is provided in a front wall (15a) of the receptacle, the outlet of the cutting chamber is aligned, in use, with the inlet of the grass collection receptacle, and the grass collection receptacle is positioned above the deck with the major part thereof within the wheelbase of the lawnmower, and with its front wall above the cutting chamber **characterised in that** the outlet of the cutting chamber is positioned substantially at a central, transverse outer edge portion of the cutting chamber, and a substantially straight volute (11a) is disposed between the outlet of the cutting chamber and the inlet of the grass collection receptacle.

2. A lawnmower as claimed in claim 1, wherein the volute (11a) rises from the outlet of the cutting chamber to define a volute exit (11b) that extends over a substantial portion of the height of the front wall (15a) of the receptacle.

3. A lawnmower as claimed in claim 2, wherein the volute exit (11b) extends over substantially the entire height of the front wall (15a) of the receptacle.

4. A lawnmower as claimed in claim 2 or claim 3, wherein the inlet of the receptacle surrounds, in use, the volute exit (11b).

5. A lawnmower as claimed in any one of claims 1 to 4, wherein the deck (1) supports a housing (2), the housing enclosing the grass collection receptacle (15).

6. A lawnmower as claimed in claim 5, further comprising a motor (10) positioned within the housing (2), the motor being in drivable engagement with the cutter blade (12).

7. A lawnmower as claimed in any one of claims 1 to 6, wherein the receptacle (15) is positioned substantially entirely within the wheelbase of the lawnmower.

8. A lawnmower as claimed in any one of claims 1 to 7, wherein the grass collection receptacle (15) is an open-topped receptacle having at least one of its walls formed with air-permeable portions.

9. A lawnmower as claimed in any one of claims 1 to 8, wherein the grass collection receptacle (15) is provided with a pair of handles positioned at the top of a pair of opposed wall portions.

10. A lawnmower as claimed in claim 5, or in any one of claims 6 to 9 when appendant to claim 5, wherein the housing (2) is provided with an upwardly-open aperture through which the grass collection receptacle can be inserted into, and removed from, the housing, and wherein a cover (7) is provided for closing said aperture when the lawnmower is in use.

11. A lawnmower as claimed in claim 10, wherein the cover (7) is pivotally mounted to the housing (2) for movement between a first position, in which the grass collection receptacle (15) can enter or leave the housing, and a second position in which the aperture is closed.

12. A lawnmower as claimed in claim 11, wherein, when the cover (7) is in the closed position, it provides a substantially airtight seal against those portions of the housing (2) defining the upwardly-open aperture.

13. A lawnmower as claimed in any one of claims 1 to 12, wherein the rotary members are wheels (8).

14. A lawnmower as claimed in claim 13, wherein there are two wheels (8) at the front of the deck and two wheels (8) at the rear of the deck.

15. A lawnmower as claimed in claim 14, further comprising a roller (9) positioned between the two rear wheels (8).

## Patentansprüche

1. Rasenmäher mit einem Deck (1), welches eine Schneidkammer (11) definiert, wobei das Deck einen Auslass zum Durchlass von geschnittenem Gras aus der Schneidkammer, eine Schneidklinge (12), welche innerhalb der Schneidkammer um eine im Wesentlichen vertikale Achse drehbar ist, und einen Grassammelbehälter (15) aufweist, welcher einen luftdurchlässigen Bereich und einen Einlass zum Eintritt des geschnittenen Grases aus der Schneidkammer enthält, wobei das Deck auf drehbaren Elementen (8) an vorderen und hinteren Positionen befestigt ist, wobei der Einlass des Grassammelbehälters in einer vorderen Wand (15a) des Behälters vorgesehen ist, der Auslass der. Schneidkammer bei Verwendung mit dem Einlass des Grassammelbehälters ausgerichtet ist und der Grassammelbehälter über dem Deck mit dem Hauptteil desselben innerhalb des Radstands des Rasenmähers und mit der vorderen Wand desselben über der Schneidkammer positioniert ist, **dadurch gekennzeichnet, dass** der Auslass der Schneidkammer im Wesentlichen in einem mittigen, querverlaufenden Außenkantenabschnitt der Schneidkammer positioniert ist und ein im Wesentlichen gerader Diffusor (11a) zwischen dem Auslass der Schneidkammer und dem Einlass des Grassammelbehälters angeordnet ist.

2. Rasenmäher nach Anspruch 1, wobei sich der Diffusor (11a) aus dem Auslass der Schneidkammer erhebt, um einen Diffusorausgang (11b) zu definieren, welcher sich über einen wesentlichen Abschnitt der Höhe der vorderen Wand (15a) des Behälters erstreckt.

3. Rasenmäher nach Anspruch 2, wobei sich der Diffusorausgang (11b) über im Wesentlichen die ganze Höhe der vorderen Wand (15a) des Behälters erstreckt.

4. Rasenmäher nach Anspruch 2 oder 3, wobei der Einlass des Behälters bei Verwendung den Diffusorausgang (11b) umgibt.

5. Rasenmäher nach einem der Ansprüche 1 bis 4, wobei das Deck (1) ein Gehäuse (2) trägt und das Gehäuse den Grassammelbehälter (15) umgibt.

6. Rasenmäher nach Anspruch 5, welcher zudem einen Motor (10) aufweist, welcher innerhalb des Gehäuses (2) positioniert ist, wobei der Motor in antreibenden Eingriff mit der Schneidklinge (12) steht.

7. Rasenmäher nach einem der Ansprüche 1 bis 6, wobei der Behälter (15) im Wesentlichen ganz innerhalb des Radstands des Rasenmähers positioniert ist.

8. Rasenmäher nach einem der Ansprüche 1 bis 7, wobei der Grassammelbehälter (15) ein Behälter mit einer offenen Oberseite ist, wobei mindestens eine der Wände desselben mit luftdurchlässigen Abschnitten gebildet ist.

9. Rasenmäher nach einem der Ansprüche 1 bis 8, wobei der Grassammelbehälter (15) mit einem Paar Griffen versehen ist, welche an der Oberseite eines Paares gegenüberliegender Wandabschnitte positioniert ist.

10. Rasenmäher nach Anspruch 5 oder einem der Ansprüche 6 bis 9, wenn zu Anspruch 5 zugehörig, wobei das Gehäuse (2) mit einer nach oben geöffneten Öffnung versehen ist, durch welche der Grassammelbehälter in das Gehäuse eingeführt und aus demselben entfernt werden kann, und wobei eine Abdeckung (7) zum Schließen der Öffnung bei Verwendung des Rasenmähers vorgesehen ist.

11. Rasenmäher nach Anspruch 10, wobei die Abdeckung (7) am Gehäuse (2) zur Bewegung zwischen einer ersten Stellung, in welcher der Grassammelbehälter (15) in das Gehäuse gelangen oder dasselbe verlassen kann, und einer zweiten Stellung schwenkbar befestigt ist, in welcher die Öffnung geschlossen ist.

12. Rasenmäher nach Anspruch 11, wobei die Abdeckung (7), wenn sie sich in der geschlossenen Stellung befindet, eine im Wesentlichen luftdichte Dichtung gegen diese Abschnitte des Gehäuses (2) liefert, welche die nach oben geöffnete Öffnung definieren.

13. Rasenmäher nach einem der Ansprüche 1 bis 12, wobei die drehbaren Elemente Räder (8) sind.

14. Rasenmäher nach Anspruch 13, wobei sich zwei Räder (8) an der Vorderseite des Decks und zwei Räder (8) an der Rückseite des Decks befinden.

15. Rasenmäher nach Anspruch 14, welcher zudem eine Rolle (9) aufweist, welche zwischen den zwei Hinterrädern (8) positioniert ist.

## Revendications

1. Tondeuse à gazon comprenant un carter (1) définissant une chambre de coupe (11), le carter comprenant un orifice de sortie destiné au passage de l'herbe coupée en provenance de la chambre de coupe, une lame de coupe rotative (12) à l'intérieur de la chambre de coupe sur un arbre substantiellement vertical, et un panier de ramassage d'herbe (15) comportant une région perméable à l'air et un orifice d'admission destiné à l'entrée de l'herbe coupée en provenance de la chambre de coupe, le carter étant monté sur des éléments rotatifs (8) en des emplacements avant et arrière, dans laquelle l'orifice d'entrée du panier de ramassage d'herbe est disposé sur une paroi avant (15a) du panier, l'orifice de sortie de la chambre de coupe est aligné, au cours de l'utilisation, avec l'orifice d'admission du panier de ramassage d'herbe, et le panier de ramassage d'herbe est placé au dessus du carter avec sa majeure partie à l'intérieur de l'empattement de la tondeuse à gazon, et avec sa paroi avant au dessus de la chambre de coupe, **caractérisée en ce que** l'orifice de sortie de la chambre de coupe est placé au niveau d'une partie centrale du bord extérieur transversal de la chambre de coupe, et **en ce qu'**une volute sensiblement rectiligne (11a) est disposée entre l'orifice de sortie de la chambre de coupe et l'orifice d'admission du panier de ramassage d'herbe.

2. Tondeuse à gazon selon la revendication 1, dans laquelle la volute (11 a) s'élève à partir de l'orifice de sortie de la chambre de coupe pour définir un orifice de sortie de volute (11 b) lequel s'étend au dessus d'une partie substantielle de la hauteur de la paroi avant (15a) du panier.

3. Tondeuse à gazon selon la revendication 2, dans laquelle l'orifice de sortie de la volute (11 b) s'étend substantiellement sur la hauteur entière de la paroi avant (15a) du panier.

4. Tondeuse à gazon selon la revendication 2 ou la revendication 3, dans laquelle l'orifice d'entrée du panier entoure, au cours de l'utilisation, l'orifice de sortie (11b) de la volute.

5. Tondeuse à gazon selon l'une quelconque des revendications 1 à 4, dans laquelle le carter (1) supporte une enveloppe (2), l'enveloppe renfermant le panier de ramassage d'herbe (15).

6. Tondeuse à gazon selon la revendication 5, comprenant en outre un moteur électrique (10) placé à l'intérieur de l'enveloppe (2), le moteur étant en engagement d'entraînement avec la lame de coupe (12).

7. Tondeuse à gazon selon l'une quelconque des revendications 1 à 6, dans laquelle le panier (15) est placé substantiellement en totalité à l'intérieur de l'empattement de la tondeuse.

8. Tondeuse à gazon selon l'une quelconque des revendications 1 à 7, dans laquelle le panier de ramassage d'herbe (15) est un panier à ouverture par le dessus dont l'une au moins de ses parois est formée avec des parties perméables à l'air.

9. Tondeuse à gazon selon l'une quelconque des revendications 1 à 8, dans laquelle le panier de ramassage d'herbe (15) est muni d'une paire de poignées placées au sommet d'une paire de parties de parois opposées.

10. Tondeuse à gazon selon la revendication 5, ou selon l'une quelconque des revendications 6 à 9 lorsqu'elles dépendent de la revendication 5, dans laquelle l'enveloppe (2) est munie d'une ouverture débouchant vers le haut à travers laquelle le panier de ramassage d'herbe peut être introduit dans l'enveloppe, et en être retiré, et dans laquelle est disposé un couvercle (7) destiné à fermer ladite ouverture lorsque la tondeuse est en cours d'utilisation.

11. Tondeuse à gazon selon la revendication 10, dans laquelle le couvercle (7) est monté de façon pivotante sur l'enveloppe (2) pour se déplacer entre une première position, dans laquelle le panier de ramassage d'herbe (15) peut entrer dans l'enveloppe ou la quitter, et une seconde position dans laquelle l'ouverture est fermée.

12. Tondeuse à gazon selon la revendication 11, dans laquelle, lorsque le couvercle (7) est dans la position fermée, il procure une fermeture substantiellement étanche à l'air en s'appuyant contre les parties de l'enveloppe (2) qui délimitent l'ouverture débouchant vers le haut.

13. Tondeuse à gazon selon l'une quelconque des revendications 1 à 12, dans laquelle les éléments rotatifs sont des roues (8).

14. Tondeuse à gazon selon la revendication 13, dans laquelle il y a deux roues (8) à l'avant du carter et deux roues (8) à l'arrière du carter.

15. Tondeuse à gazon selon la revendication 14, comprenant en outre un rouleau (9) placé entre les deux roues arrière (8).
